# DEMANDE DE BREVET EUROPEEN

(11) **EP 2 073 175 A1**
(43) Date de publication de la demande: **24.06.2009**
(21) Numéro de dépôt: 07291558.0
(22) Date de dépôt: 17.12.2007
(51) Int. Cl.: G07F 7/10

(54) **Support d'identification sécurisé et procédé de sécurisation d'un tel support**

(71) Demandeur: Gemalto SA, 92190 Meudon (FR)
(72) Inventeur: Ros, Frédéric, 92190 Meudon (FR); Launay, Nathalie, 92190 Meudon (FR); Borla, Jérôme, 92190 Meudon (FR)
(74) Mandataire: Fragnaud, Aude

(57) **Abrégé**

La présente invention concerne un support d'identification sécurisé et un procédé de sécurisation d'un tel support. Le support d'identification sécurisé comprend une puce électronique et, imprimée sur une face, une information d'identification (Ip) relative au titulaire du support. Il comprend en outre un ensemble d'attributs caractéristiques Att(Ipi) de l'information d'identification, généré à partir d'une capture (Ipi) de l'information d'identification et d'un algorithme d'extraction. Cet ensemble d'attributs caractéristiques de l'image analogique imprimée est stocké dans la puce et est destiné à être comparé, lors d'une phase d'authentification, avec un second ensemble d'attributs caractéristiques de la même image imprimée sur le support.

## Description

La présente invention concerne un support d'identification sécurisé et un procédé de sécurisation d'un tel support.

L'invention se situe dans le domaine des supports d'identification comprenant un élément de stockage mémoire, de type puce, et sur lequel une information d'identification variable est imprimée, telle que la photographie du porteur par exemple, et destinée à des applications sécuritaires, telles que par exemple des applications identitaires, gouvernementales ou autres. Ces supports, comprenant une puce avec et/ou sans contact, peuvent par exemple être des permis de conduire, des cartes d'identité, des cartes de membre, des badges d'accès, des passeports, des cartes bancaires, des porte-monnaie électroniques, des cartes multi-application et autres papiers de valeurs. Du fait de la valeur et de l'importance associée à chacun de ces documents, ils font souvent l'objet de copies non autorisées, d'altérations, de modifications, et contrefaçons.

De tels supports comprennent un corps, une puce électronique et une interface de communication avec le monde extérieur. Dans le cas d'un support à contact, l'interface de communication se présente sous la forme de plages de contact affleurant la surface du corps. Dans le cas d'un support sans contact, l'interface se présente sous la forme d'une antenne noyée dans le corps. Selon les moyens de communication dont elle dispose, le support est dit à contacts, sans contact, hybride ou dual interface (interface double).

Pour éviter que ces supports soient altérés, modifiés ou contrefaits, il existe aujourd'hui plusieurs techniques de sécurisation.

Ainsi, une première technique consiste à ajouter des éléments de sécurité de type hologrammes, guilloches, encres UV, micro-lettres, etc... sur l'information d'identification imprimée sur le support afin de limiter la fraude. Cependant, cette technique représente une sécurisation de premier niveau et ne permet pas d'empêcher l'échange de la puce par exemple.

Une autre technique, consiste à relier l'élément de sécurité à un autre élément du support d'identification. Cette technique, connue sous la dénomination PROOFTAG^{™} et développée par la société NOVATEC, consiste à générer des codes à bulles aléatoires. Pour la vérification du code, une base de données est interrogée et une vérification est effectuée avec des données enregistrées sur la piste magnétique de la carte, ou alors, avec des données imprimées sur son corps.

D'autres solutions de sécurisation, dites de digital watermarking (tatouage numérique), consistent à insérer une donnée cachée dans l'impression. Ces solutions semblent être les techniques les mieux adaptées et en vue pour la sécurisation des supports physiques intégrant une puce électronique et une image type photo d'identité car elles ont pour avantage, entre autre, de ne pas nécessiter l'ajout d'éléments physiques lisibles particuliers dans et/ou sur le corps de carte. Il s'agit des techniques commercialisées sous les appellations CRYPTOGLYPHE^{™}, le SCRAMBLED INDICIA^{™}, l'IPI^{™} ou l'ICI^{™}.

Le watermarking consiste en fait à dissimuler un message, que l'on désire transmettre confidentiellement, dans un ensemble de données d'apparence anodine, de façon que sa présence soit imperceptible. Comme dans le cas de la cryptographie, le watermarking permet d'échanger des messages avec un correspondant sans que d'autres personnes puissent en prendre connaissance. Mais alors qu'avec la cryptographie habituelle, la sécurité repose sur le fait que le message ne sera sans doute pas compris, avec le watermarking, la sécurité repose sur le fait que le message ne sera pas sans doute pas détecté.

Le watermarking est donc utilisé pour sécuriser un support, notamment un support image, son ou vidéo, par insertion astucieuse d'une marque permanente dans ledit support, sans dégradation apparente de celui-ci.

Le digital watermarking est appliqué à des images numériques. Il a connu un essor considérable ces dernières années. Cela est dû essentiellement au besoin grandissant de protéger le transfert des images sur internet. Cette technique consiste à insérer une marque sur des images numériques. Cette marque est imperceptible à l'oeil humain mais lisible par un système de reconnaissance dédié. Ce système de reconnaissance permet d'assurer l'authenticité de l'image protégée.

Le contenu d'une marque est typiquement de quelques dizaines de bits maximum d'information. Elle peut contenir des informations sur les permissions attachées au document, ou alors, une indication sur la personne propriétaire du document. Ces informations peuvent être codées à l'aide d'une clé secrète unique à chaque porteur. Ainsi, toute personne qui se réclamera illégalement propriétaire du document pourra être découverte.

Les conditions d'un bon digital watermarking pour les supports de type carte à puce munis d'une image sont les suivantes : il doit être robuste aux attaques dites « print-scan » et aux attaques de vieillissement. Dans le premier cas, la marque doit présenter une excellente résistance à l'impression et pouvoir être lue avec une grande facilité. En pratique, la marque est l'objet de détériorations, dues notamment au tramage impression, ou à la conversion analogique numérique par exemple, qui se traduisent par l'ajout de bruit, de légères déformations géométriques, et d'un changement d'échelle engendré par la chaîne d'acquisition. Ces détériorations ne facilitent pas une synchronisation de l'image (recherche des repères de l'image). La lecture de la marque doit, malgré ces détériorations, être effectuée à partir d'une capture analogique de la photo d'identité préalablement imprimée, par exemple au moyen d'un scanneur, d'un caméscope numérique, d'une caméra de type Webcam ou d'un appareil photo numérique.

Dans le deuxième cas, le support et la photographie subissent des attaques liées au vieillissement. Les détériorations sont, dans ce cas, à la fois d'ordre « mécanique » et « colorimétrique ». Elles se traduisent par exemple par le ternissement des couleurs, et la présence de saletés ou de rayures liées à l'utilisation fréquente et non protégée des corps de carte. Or, l'interprétation de la marque doit pouvoir se faire même si l'image de la photo d'identité a subit ce genre d'attaques.

Si les techniques de digital watermarking semblent être des plus prometteuses pour les applications de type sécurisation de corps de cartes à puces, il s'avère que ces techniques ne résistent pas à toutes les attaques sur l'image imprimée.

En outre, la vérification, après lecture des informations de sécurisation physique cachées, nécessite bien souvent l'accès à une base de données, ce qui engendre des difficultés de stockage de ces données, de sécurisation des données stockées et, tout simplement, d'accès à ces données.

Pour essayer d'améliorer la robustesse aux attaques et pour éviter l'accès à une base de données pour la vérification de l'élément sécurisé, une solution a été envisagée et a fait l'objet d'une demande de brevet publiée sous le numéro EP1800944. Cette solution, schématisée sur la figure 1, consiste à générer, à partir d'une image numérique 21, d'une séquence pseudo-aléatoire 22 et d'un algorithme d'insertion 23, un vecteur de caractéristiques images Vsi(n), une clé secrète C et une signature de l'image numérique qui sont stockés dans la puce. Une étape ultérieure consiste ensuite à générer, à partir de l'image analogique imprimée et capturée, et de la clé secrète C, un vecteur caractéristiques images Vsi(p). La dernière étape du procédé consiste ensuite à comparer au moyen d'un algorithme de relecture 29 les vecteurs caractéristiques images Vsi(n) et Vsi(p).

Ce procédé, tout comme tous les procédés de sécurisation existants à ce jour, consiste donc à comparer, d'une manière directe ou indirecte, une image analogique imprimée (Ip) sur un support à une image numérique (In), pour s'assurer de l'existence d'un lien entre l'image imprimée et la puce et ainsi confirmer la validité de l'ensemble corps du support/puce. Cependant, l'image analogique imprimée (Ip) est dégradée par rapport à l'image numérique (In). La dégradation de l'image provient d'une part de l'impression, qui attaque plus particulièrement les hautes fréquences, de la capture de l'image, notamment du bruit du capteur et du contexte de l'éclairage, et d'autre part d'une inévitable interpolation pour retrouver le format numérique. L'image analogique est finalement la transformée de l'image numérique par une transformation dite RST (de l'anglais « Rotation Scale Translation ») résultant des rotations, homothéties et translations subies par l'image lors de son impression. A cet ensemble constituant les attaques naturelles liées au procédé de sécurisation, s'ajoutent les attaques de l'image imprimée liées au vieillissement de la carte, qui se traduisent par des rayures sur l'image, un ternissement des couleurs, etc.... Le fait que l'image imprimée (Ip) ne soit qu'une version dégradée de l'image numérique (In) pose de sérieux problèmes à toutes les solutions existantes. Par conséquent, une telle comparaison de l'image analogique à l'image numérique n'est pas fiable à 100%, et la fiabilité décroit avec le temps du fait des dégradations liées au vieillissement. Concrètement, pour faire une comparaison efficiente, et quelles que soient les techniques et/ou précautions utilisées, entre une image numérique et une image analogique, on doit accepter d'être tolérant par nature pour ne pas avoir un taux trop élevé de faux rejet (False Rejection Rate), c'est-à-dire de rejet de carte authentique. Cette tolérance affecte inévitablement la qualité du diagnostic : on augmente obligatoirement le taux d'acceptation FAR (False Acceptance Rate) et on diminue en quelque sorte le niveau de sécurité.

Ceci est particulièrement identifié dans le monde du watermarking car le tatouage doit à la fois être imperceptible pour être acceptable et robuste, et être décodable malgré les attaques. Ces deux objectifs sont conflictuels et la non maitrise de la dégradation affaiblit le processus.

Aussi, le problème technique objet de la présente invention consiste à proposer un procédé de sécurisation d'un support d'identification comprenant une puce électronique et, imprimée sur une face, une information d'identification relative au titulaire du support, qui permettrait de garantir l'authenticité de l'information d'identification et le lien entre cette information et le porteur du support, et ce tout au long de la vie du support, c'est-à-dire quel que soit les conditions environnementales et mécaniques auxquelles est soumis le support.

La solution au problème technique posé est obtenue, selon la présente invention, par le fait que le procédé comprend une phase de personnalisation mettant en oeuvre les étapes suivante :
- référencer l'information d'identification imprimée par rapport aux bords physiques du support,
- capturer l'information d'identification au moyen d'un dispositif de capture,
- générer, à partir d'un algorithme d'extraction, un premier ensemble d'attributs caractéristiques de l'information d'identification capturée,
- stocker l'ensemble d'attributs générés dans la puce électronique.

Ainsi, on stocke dans la puce un premier ensemble d'attributs caractéristiques de l'image analogique imprimée qui sont destinés à être comparés, lors d'une phase ultérieure d'authentification, avec un second ensemble d'attributs caractéristiques de la même image imprimée sur le support et référencée physiquement de la même manière.

Une étape préalable à la phase de personnalisation consiste en outre créer une image numérique In destinée à être imprimée sur le support, ladite image numérique étant réalisée au moyen d'un dispositif de prise de vue, et à générer une clé secrète, destinée à être stockée dans la puce électronique du support, à partir de cette image numérique. Pour cela, la clé secrète, permettant de signer à la fois l'image prise mais aussi l'image résultante imprimée, comprend notamment des paramètres Vscan liés à la capture d'image.

Le fait de signer une information analogique issue d'un support référencé physiquement et non plus une information numérique comme dans les techniques existantes permet de faire une comparaison à partir d'une seule et même image imprimée analogique ayant déjà subit des dégradations au moment de son impression, notamment la transformation dite RST et la dégradation du signal. La signature physique de l'image imprimée permet non seulement de vérifier l'authenticité de l'information d'identification du porteur du support mais aussi l'authenticité physique du support, et cela tout en s'affranchissant grandement des contraintes de vieillissement du support.

L'invention concerne également un support d'identification sécurisé comprenant une puce électronique et, imprimée sur une face, une information d'identification relative au titulaire du support. Ce support est remarquable en ce qu'il comprend en outre un ensemble d'attributs caractéristiques de l'information d'identification généré à partir d'une capture de l'information d'identification et d'un algorithme d'extraction.

L'invention porte enfin sur un équipement pour l'authentification d'un tel support sécurisé. L'équipement est remarquable en ce qu'il comprend :
- des moyens pour taquer le support,
- un dispositif de capture d'image,
- un moyen de communication avec la puce électronique du support,
- des moyens de calcul aptes à générer, à partir d'un logiciel d'extraction, un ensemble d'attributs caractéristiques d'une image capturée.

D'autres particularités et avantages de l'invention apparaîtront à la lecture de la description suivante faite à titre d'exemple illustratif et non limitatif, en référence aux figures annexées qui représentent :

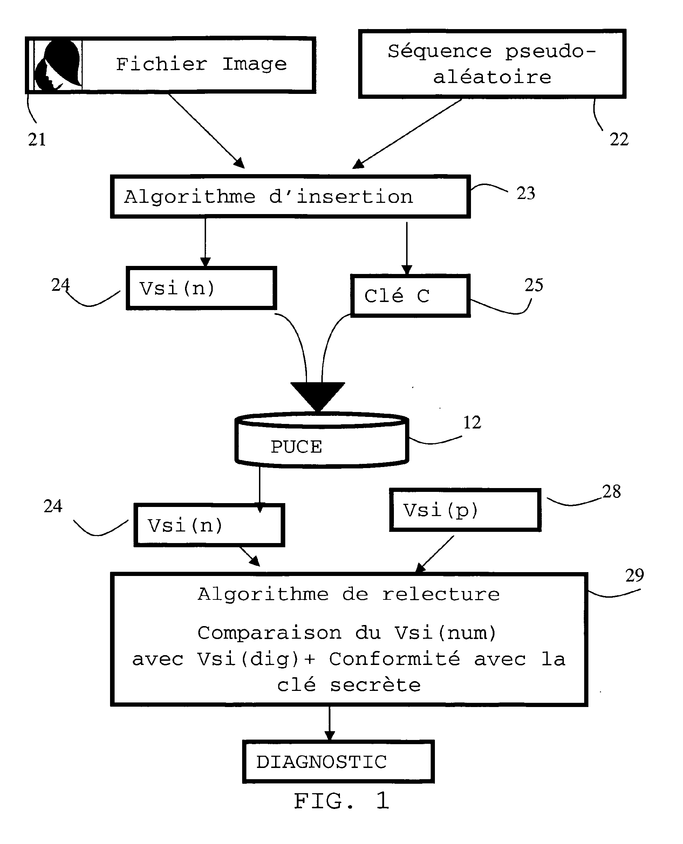

- la figure 1, déjà décrite, un organigramme illustrant les étapes d'un procédé de sécurisation connu,
- les figures 2A et 2B, respectivement un schéma et un organigramme illustrant les étapes du procédé de sécurisation selon l'invention lors d'une phase de personnalisation,
- les figures 3A et 3B, respectivement un schéma et un organigramme illustrant les étapes du procédé de sécurisation selon l'invention lors d'une phase d'authentification.

Dans la présente description, on entend par algorithme un procédé automatique dont l'objet est de transformer une information en une autre information. On schématise cette transformation en disant qu'une donnée d'entrée est modifiée via un algorithme en donnée de sortie, appelé également « résultat ».

Par algorithme d'extraction on entend un algorithme capable d'extraire d'une information, un certain nombre de données suivant un protocole défini et de les stocker dans un support ou périphérique suivant aussi un protocole dédié.

Par clé secrète, on entend une clé unique à chaque puce, qui a pour fonction la signature d'une information d'identification, la capture d'une telle information, et l'identification d'attributs caractéristiques de cette information d'identification. Elle sert d'entrée lors de la capture de l'image imprimée et de l'extraction de ses attributs caractéristiques au moment de la phase de personnalisation et de la phase d'authentification du support. Sans la connaissance de la clé, et donc sans la puce d'origine, il est impossible d'accéder aux informations qui vont permettre de valider le support selon l'invention.

Par information d'identification, on entend tout type de données texte ou photographies ou image autre liées à l'identité du porteur du support. Dans les exemples décrits par la suite, il s'agira essentiellement de la photographie du titulaire.

Le support d'identification selon l'invention comprend une puce électronique et peut se présenter sous différents formats aptes à être référencés physiquement. Dans le cas des cartes à puce, la carte peut être avec et/ou sans contact.

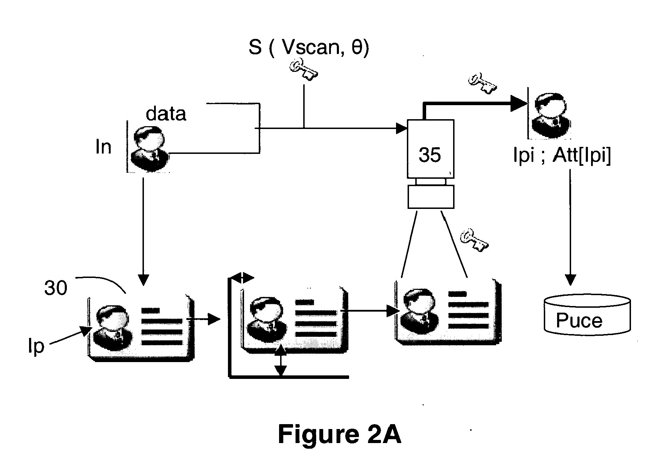

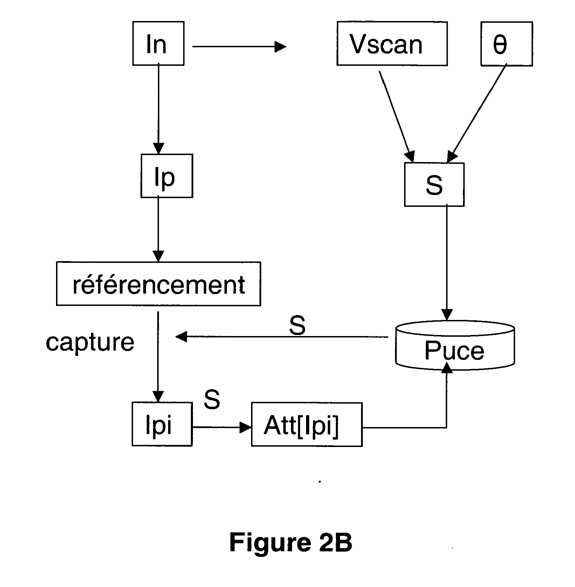

La figure 2A schématise les étapes mises en oeuvre lors d'une première phase du procédé de sécurisation selon l'invention. La figure 2B détaille l'enchainement de ces étapes sous forme d'un organigramme. Une information d'identification numérique, relative au porteur d'une carte 30, doit être imprimée sur cette carte. Cette information d'identification comprend en général non seulement des données textes, telles que le nom, le prénom, la date et naissance ou autre du titulaire, mais aussi une photographie du titulaire. La photographie est prise à l'aide d'un dispositif de prise de vue de type appareil photo numérique ou caméra numérique. La photographie numérique In, ainsi que les données texte, sont ensuite imprimées sur la carte de manière traditionnelle dans le domaine des cartes. La photographie imprimée Ip peut aussi bien être imprimée en couleur qu'en noir et blanc.

Une étape préalable au procédé de sécurisation consiste dans un premier temps à générer une signature de l'image numérique captée, dans l'exemple la photographie du titulaire. Cette signature se présente sous la forme d'une clé secrète S, stockée dans la puce, et permet ensuite de signer l'image résultante. Pour cela, la clé secrète S est calculée à partir de l'image numérique In de départ et/ou des données personnelles « data » du titulaire de la carte, et du contexte de capture de l'image numérique de départ. En effet, selon la clarté de l'image numérique résultante de la prise d'image, il est possible de déterminer des paramètres Vscan avec lesquels l'image a été prise. Ces paramètres Vscan dépendent essentiellement de deux variables. Une première variable correspond à la quantité de lumière envoyée par le dispositif de prise de vue, et une deuxième variable correspond aux paramètres standards de la caméra, tel que le temps d'intégration par exemple.

Par ailleurs, chaque photo appartient à une personne donnée et est destinée à être imprimée sur un support qui lui sera attribué. Par conséquent, la photo est également liée à des données personnelles « data » liées au porteur du support. Tous ces paramètres permettent de générer une signature, selon l'équation : S = data + In * Vscan, qui est destinée à être stockée dans un élément mémoire en tant que clé secrète S. Ainsi, on signe à la fois la manière de capter l'image (caméra/éclairage) et l'image résultante, qui elle-même dépend comme expliqué ci-après de la position de l'impression de l'image par rapport aux bords physiques de la carte.

Dans une étape ultérieure, le support 30 supportant l'image imprimée Ip est mis en place contre des taquets prévus pour référencer l'image imprimée, c'est-à-dire dans l'exemple la photographie du titulaire, par rapport aux bords physiques du support. Pour cela, lorsqu'il s'agit d'une carte à puce au format ISO, la carte est taquée par exemple sur ses trois points ISO, tels que définis dans la norme 7816-2 (1988). Selon cette norme, les trois points de référence ISO sont définis en construisant deux axes perpendiculaires X et Y s'interceptant en O, en marquant trois points de référence P2 et P3 mesurés à 11,25mm et 71,25mm de O sur l'axe X et P1 à 27mm de O sur l'axe Y. Ainsi tous les points de l'image, et donc leurs coordonnées, peuvent être référencés par rapport aux bords physiques du support 30. Par conséquent, il est important que le support personnalisé puisse être référencé. La précision de la position d'une impression sur une carte est très inférieure à la précision avec laquelle on peut la repérer. Typiquement, on parle du 10^{ème} de millimètre dans le premier cas et du 100^{ème} de millimètre dans le second cas. Il est donc très difficile de reproduire une impression avec la même précision de repérage. Ainsi, ce qui apparait comme un inconvénient pour l'impression est utilisé avantageusement pour l'authentification et le diagnostic qui en résulte.

De plus, en général, les éléments de repérage ne sont pas connus, les bords de l'image ne sont généralement pas précis car il n'y a pas forcément de cadre, et parfois ils sont inexistants. Cette étape de référencement des points de l'image par rapport aux bords physiques du support est donc nécessaire pour réaliser les étapes ultérieures du procédé.

Un dispositif 35 de capture d'image, de type scanner, caméscope numérique, caméra de type webcam ou appareil photo numérique, permet ensuite de réaliser une capture de l'image Ip imprimée. Pour cela, l'image analogique est capturée à partir de la clé secrète S, générée au moment de la prise de vue et stockée dans la puce, et comprenant, entre autre, les paramètres de capture d'image Vscan avec lesquels la capture doit être faite. Ces paramètres comprennent notamment une variable correspondant au temps d'intégration du dispositif de capture d'image (de l'ordre de 200 µs à 1s) et une variable correspondant à l'intensité lumineuse. La connaissance des paramètres Vscan est indispensable pour retrouver une image capturée Ipi de qualité constante.

Une fois l'image imprimée capturée Ipi, un premier ensemble Att[Ipi] d'attributs caractéristiques de l'image capturée est généré à partir d'un algorithme d'extraction. Cet ensemble d'attributs est formé par des blocs de l'image situés à des emplacements tels qu'ils sont très robustes aux attaques environnementales de types rayures ou autres. Ces attributs sont des attributs spaciaux caractéristiques de l'image, encore dénommés « feature points » en terminologie anglo-saxonne, et qui permettent de retrouver l'essentiel de l'information même en cas de vieillissement. Ils comprennent un ensemble de blocs dans l'image, chaque bloc étant formé par un coin ou une frontière dans l'image par exemple.

Pour extraire ces attributs caractéristiques de l'image, l'algorithme d'extraction peut faire appel à différents moyens connus de détection. Ainsi, dans un exemple, il peut faire appel à un algorithme de détection de type Harris. L'ensemble des attributs Att[Ipi] ainsi généré dépend en fait de l'image imprimée Ip et d'un ensemble de paramètres θ définissant le contexte d'extraction des attributs caractéristiques, qui sont par ailleurs référencés par rapport aux bords physiques de la carte. L'ensemble de paramètres θ fait également partie de la clé secrète S au même titre que les paramètres de capture d'image Vscan.

Il est extrêmement difficile de trouver les paramètres d'extraction θ numériques et analogiques qui conservent les mêmes attributs caractéristiques de l'image numérique à l'image analogique scannée. Par exemple, ces techniques dites de « feature points », consistant à extraire les attributs caractéristiques d'une image, ont été proposées pour de la synchronisation watermarking mais donnent des résultats mitigés de part la trop grande dégradation du signal après les attaques « print/scan » évoquées dans le préambule de la description. C'est pourquoi, selon ce procédé de sécurisation, on génère un ensemble d'attributs à partir d'une image analogique Ipi, scannée en utilisant des paramètres de capture Vscan déterminés, à partir de paramètres d'extraction θ analogiques, de manière à comparer cet ensemble à un second ensemble d'attributs de la même image analogique scannée lors d'une phase ultérieure d'authentification.

Le premier ensemble d'attributs Att[Ipi] ainsi généré à partir de l'image analogique capturée Ipi est ensuite stocké dans la puce électronique du support.

Dans une variante de réalisation, les attributs caractéristiques de l'image qui sont générés peuvent en outre intégrer des attributs de type fréquentiel. Le problème majeur du vieillissement sur les cartes est le ternissement des couleurs et la présence de nombreuses rayures. Or, on sait que le ternissement des couleurs affecte essentiellement les basses fréquences de l'image et que les rayures affectent les hautes voire très hautes fréquences. En revanche, les moyennes fréquences sont beaucoup moins endommagées par les attaques liées au vieillissement. Par contre, le spectre des moyennes et hautes fréquences de l'image est lourdement dégradé par les attaques liées au procédé de sécurisation. La dimension fréquentielle de l'image (fₓ*f_{y}) est identique à la dimension spatiale (Sₓ*S_{y}). La bande de fréquence moyenne est déterminée à partir de cette donnée et aussi par rapport au niveau de dégradation du signal pour une imprimante donnée. Ainsi, à partir de calibres élémentaires et pour chaque imprimante, on définit une fréquence haute et basse en analysant la dégradation entre signal analogique et signal numérique. Ces limites déterminent la bande des moyennes fréquences. En extrayant les attributs de moyenne fréquence sur l'image imprimée Ip, il devient alors possible de contrer les attaques naturelles dues au vieillissement de la carte.

Une autre variante consiste à optimiser la résolution du scanner ou du dispositif de capture d'image utilisé en ne considérant que la zone centrale de la photographie, c'est-à-dire les caractéristiques essentielles du portrait (les yeux, le nez etc...) qui contiennent l'essentiel de l'information d'identification. Cela permet de diminuer les temps de traitement.

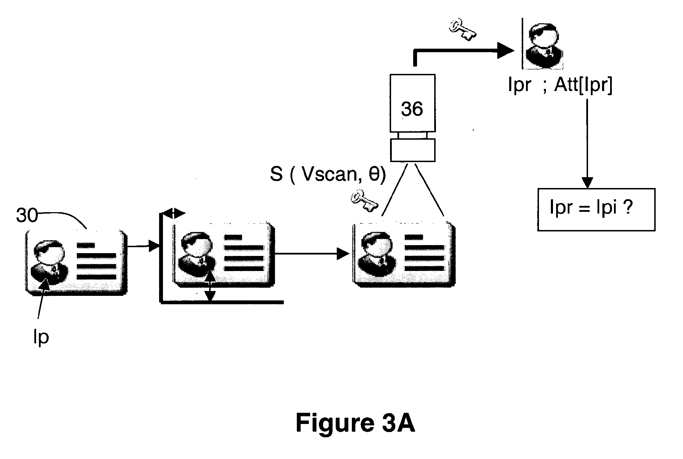

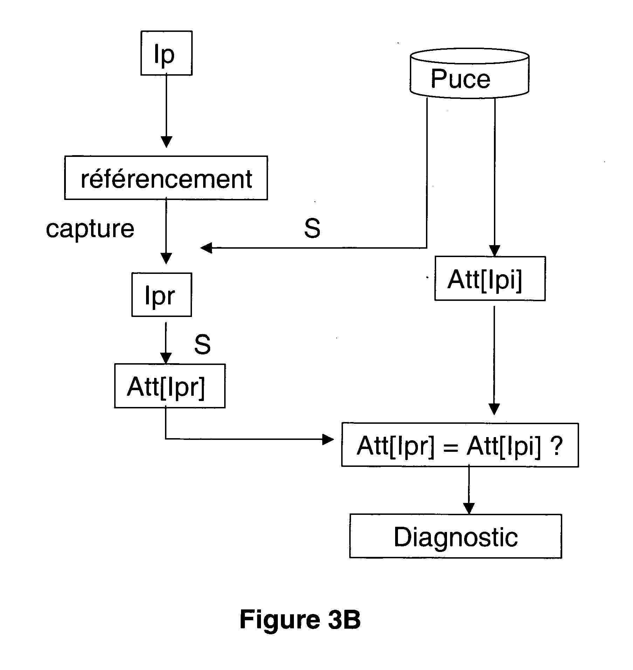

Dans une phase ultérieure du procédé de sécurisation, illustrée sur les figure 3A et 3B, le support d'identification est authentifié pour vérifier d'une part que la photo imprimée est bien la photo qui a réellement été imprimée sur le support lors de la personnalisation, et qu'elle n'a pas été copiée, altérée ou contrefaite sur un autre support, vérifier que la photo est celle du titulaire du support, et d'autre part de s'assurer du lien entre l'image imprimée et la puce pour confirmer la validité de l'ensemble support/puce. Cette authentification peut être faite tout au long de la vie du support et de l'image imprimée, quelles que soient les contraintes de vieillissement climatiques et mécaniques subies par le support.

Une première étape consiste donc à placer le support 30 d'identification contre des taquets de l'équipement d'authentification de manière à ce que tous les points de l'image imprimée Ip soient référencés par rapport aux bords physiques du support.

L'image analogique imprimée Ip est alors capturée au moyen d'un dispositif 36 de capture d'image, à partir de la clé secrète S stockée dans la puce électronique et lue par l'équipement d'authentification qui comprend un moyen de communication avec la puce. Ainsi, le dispositif de capture d'image scanne l'image imprimée Ipr avec des paramètres de capture Vscan prédéterminés, et notamment une intensité lumineuse et une vitesse, qui sont définis dans la clé secrète S. Un algorithme d'extraction du même type que celui utilisé lors de la personnalisation, permet ensuite de générer un second ensemble d'attributs Att[Ipr] caractéristiques de l'image imprimée capturée Ipr. Des moyens de calculs de l'équipement permettent de réaliser un tel traitement.

Un algorithme de comparaison permet ensuite de comparer le second ensemble d'attributs Att[Ipr] au premier ensemble Att[Ipi] stocké dans la puce pour établir un diagnostic sur l'authenticité.

Grâce au procédé qui vient d'être décrit, il est possible de vérifier l'authenticité d'une information d'identification imprimée sur un support et de s'assurer que le support est d'origine et que la puce n'a pas été échangée, tout au long de la vie du support. Cette vérification est d'une grande fiabilité et en tout cas d'une fiabilité beaucoup plus sûre et robuste, à technicité égale, à ce que l'on peut obtenir avec une approche numérique-analogique.

La combinaison des deux types d'attributs augmente la robustesse du procédé de sécurisation. Par ailleurs, lorsque les attributs de type fréquentiel sont pris en compte, seules les fréquences moyennes caractéristiques de l'image sont utilisées. Elles constituent un marqueur robuste à toute attaque de vieillissement. Dans ce cas, les dégradations de l'image sur les hautes et très basses fréquences ne sont pas prises en compte en premier lieu.

Par ailleurs, la puce ne sert que d'élément de stockage mémoire. Tout autre élément mémoire peut donc être utilisé à la place de cette puce.

Enfin, grâce au procédé décrit, il n'y a plus de nécessité d'avoir recours à une base de données externe ni à des données cryptées pour asseoir la sécurité.

## Revendications

1. Support d'identification sécurisé comprenant une puce électronique et, imprimée sur une face, une information d'identification relative au titulaire du support, **caractérisé en ce qu'**il comprend en outre un ensemble d'attributs caractéristiques Att(Ipi) de l'information d'identification, généré à partir d'une capture de l'information d'identification et d'un algorithme d'extraction.

2. Support d'identification sécurisé selon la revendication 1, **caractérisé en ce qu'**il comporte en outre une clé secrète S générée à partir d'une capture d'image numérique (In) correspondant à l'information d'identification imprimée.

3. Support d'identification selon la revendication 2, **caractérisé en ce que** la clé secrète S comprend une définition de paramètres (Vscan) de capture d'image.

4. Support d'identification selon la revendication 2 ou 3, **caractérisé en ce que** la clé secrète S comprend en outre des paramètres θ définissant le contexte d'extraction des attributs caractéristiques.

5. Support d'identification selon l'une quelconque des revendications précédentes **caractérisé en ce que** les attributs caractéristiques de l'information d'identification comprennent des attributs spaciaux et/ou des attributs fréquentiels.

6. Support d'identification selon la revendication 5, **caractérisé en ce que** les attributs fréquentiels appartiennent au groupe des moyennes fréquences.

7. Support d'identification selon l'une des revendications 1 à 6, **caractérisé en ce qu'**il se présente sous la forme d'une carte à puce à puce.

8. Support selon l'une des revendications 1 à 7, **caractérisé en ce que** l'information d'identification se présente sous la forme d'une photographie visible en couleur ou en noir et blanc du titulaire du support.

9. Procédé de sécurisation d'un support (30) d'identification comprenant une puce électronique et, imprimée sur une face, une information d'identification (Ip) relative au titulaire du support, **caractérisé en ce qu'**il comprend une phase de personnalisation mettant en oeuvre les étapes suivantes :
- référencer l'information d'identification imprimée par rapport aux bords physiques du support,
- capturer l'information d'identification au moyen d'un dispositif de capture,
- générer, à partir d'un algorithme d'extraction, un premier ensemble d'attributs caractéristiques Att(Ipi) de l'information d'identification capturée (Ipi),
- stocker l'ensemble d'attributs Att(Ipi) générés dans la puce électronique.

10. procédé selon la revendication 9, comprenant en outre, une étape préalable à la phase de personnalisation, de génération d'une clé secrète S, destinée à être stockée dans la puce électronique du support, à partir d'une capture d'image numérique (In) correspondant à l'information d'identification imprimée (Ip).

11. Procédé de sécurisation selon la revendication 9 ou 10, **caractérisé en ce qu'**il comprend, ultérieurement à la phase de personnalisation, une phase d'authentification mettant en oeuvre les étapes suivantes :
- référencer l'information d'identification imprimée (Ip) par rapport aux bords physiques du support,
- capturer l'information d'identification au moyen d'un dispositif de capture,
- générer, à partir d'un algorithme d'extraction, d'un second ensemble d'attributs caractéristiques Att(Ipr) de l'information d'identification capturée (Ipr),
- comparer le premier ensemble d'attributs caractéristiques Att(Ipi) généré et stocké dans la puce au moment de la phase de personnalisation avec le second ensemble d'attributs caractéristiques Att(Ipr) généré.

12. Procédé selon l'une des revendications 9 à 11, **caractérisé en ce que** l'étape de capture de l'image pendant les phases de personnalisation et d'authentification est réalisée à partir de la clé secrète S stockée dans la puce du support.

13. Procédé selon la revendication 12, dans lequel la clé secrète comprend des paramètres (Vscan) de capture d'image et des paramètres θ définissant le contexte d'extraction des attributs caractéristiques d'une image capturée.

14. Procédé selon l'une quelconque des revendications 9 à 13, dans lequel l'algorithme d'extraction fait appel à un algorithme de détection de type Harris.

15. Procédé selon l'une des revendications 9 à 14, dans lequel les ensembles d'attributs caractéristiques qui sont générés comprennent des attributs spaciaux et/ou fréquentiels.

16. Procédé selon la revendication 15, **caractérisé en ce que** les attributs fréquentiels appartiennent au groupe des moyennes fréquences.

17. Procédé selon l'une des revendications 9 à 16, **caractérisé en ce que** le support est une carte à puce au format ISO, et **en ce que** les étapes de référencement par rapport aux bords physiques du support consistent à taquer le support sur ses points ISO.

18. Equipement pour l'authentification d'un support d'identification sécurisé selon l'une des revendications 1 à 8, **caractérisé en ce qu'**il comprend :
- des moyens pour taquer le support,
- un dispositif de capture d'image,
- un moyen de communication avec la puce électronique du support,
- des moyens de calcul aptes à générer, à partir d'un logiciel d'extraction, un ensemble d'attributs caractéristiques d'une image capturée.

19. Equipement selon la revendication 18, **caractérisé en ce que** le dispositif de capture d'image est de type scanner, caméscope numérique, caméra du type webcam, ou appareil photo numérique.

20. Equipement, selon la revendication 18 ou 19, **caractérisé en ce qu'**il comprend en outre des moyens de calculs aptes à effectuer des comparaison pour établir un diagnostic sur l'authenticité du support.
